(19)

Europäisches
Patentamt

European
Patent Office

Office européen
des brevets

(11) **EP 1 936 169 A2**

(12) **DEMANDE DE BREVET EUROPEEN**

(43) Date de publication:
**25.06.2008  Bulletin 2008/26**

(51) Int Cl.:
*F02D 41/34* *(2006.01)*        *G01D 5/12* *(2006.01)*

(21) Numéro de dépôt: **07291353.6**

(22) Date de dépôt: **12.11.2007**

(84) Etats contractants désignés:
**AT BE BG CH CY CZ DE DK EE ES FI FR GB GR
HU IE IS IT LI LT LU LV MC MT NL PL PT RO SE
SI SK TR**
Etats d'extension désignés:
**AL BA HR MK RS**

(30) Priorité: **22.12.2006  FR 0611410**

(71) Demandeur: **IFP**
**92852 Rueil-Malmaison Cédex (FR)**

(72) Inventeurs:
• **Auclair, Dominique**
  **94350 Villiers-sur-Marne (FR)**
• **Lejeune, Olivier**
  **78650 Beynes (FR)**
• **Masson, Olivier**
  **92500 Rueil-Malmaison (FR)**

(54) **Méthode d'estimation des durées des dents d'une cible moteur**

(57)      - Méthode permettant de déterminer en fonction
du temps l'angle de rotation d'un vilebrequin par une estimation de la position de dents manquantes sur une cible
moteur.
- On acquiert à l'aide d'un capteur un signal périodique
en fonction du temps comportant des créneaux, chacun
des créneaux indiquant le passage d'une dent devant ce
capteur. On estime la position d'un créneau manquant
sur le signal, correspondant à une dent manquante sur
la cible, en réalisant les étapes suivantes : on estime au
cours d'un cycle N un intervalle de temps S entre le passage devant le capteur d'une dent dp précédant la dent
manquante d et le passage devant le capteur d'une dent
$d_s$ suivant la dent manquante *d* à l'aide de l'intervalle de
temps entre les passages des mêmes dents au cycle
précédent *N-1*. Puis, on estime la position du créneau
manquant dans cet intervalle *S*, en fonction de la position
des créneaux dans l'intervalle de temps A entre le passage devant le capteur de la dent $d_p$-*r* et le passage devant le capteur de la dent $d_s$-*r* au cycle *N,* avec

$$r = \frac{l.j}{2.k},$$, le moteur étant à *j* temps (2 ou 4) et comportant *k* cylindres et une cible à *l* dents, dont la dent manquante. Enfin, on détermine en fonction du temps l'angle
de rotation du vilebrequin à l'aide du signal ainsi modifié.
- Application notamment au contrôle moteur.

Fig. 1

EP 1 936 169 A2

**Description**

La présente invention concerne le domaine du contrôle moteur et de l'acquisition de données synchrones avec la révolution du vilebrequin moteur, et plus particulièrement l'invention concerne le domaine des méthodes de prédiction angulaire permettant de déterminer la position géométrique précise du vilebrequin.

L'invention peut trouver des applications dans les laboratoires d'étude des motoristes pour aider à la conception des systèmes de commande de moteurs d'automobiles. Il peut être intégré également dans les systèmes de commande de moteurs au sein d'un véhicule.

Durant le cycle de fonctionnement d'un moteur à combustion interne, de nombreuses actions doivent être synchronisées sur la position géométrique du vilebrequin. C'est le cas du contrôle de l'injection de carburant, du pilotage des bougies d'allumage, et de la gestion des organes de distribution. De même, en phase d'étude, les motoristes ont besoin de réaliser des acquisitions de signaux sur des fenêtres angulaires précises, ainsi que de mesurer la vitesse instantanée du moteur. Par exemple, il est nécessaire de connaître la position angulaire du vilebrequin et sa vitesse instantanée dans le cadre de systèmes de commande permettant d'optimiser le point de fonctionnement d'un moteur à combustion interne par le traitement en temps réel de paramètres significatifs de son fonctionnement tels que la pression régnant dans les différentes chambres de combustion à une série d'instants successifs de chaque cycle de combustion.

Pour réaliser ces différentes actions, un moteur est équipé d'un calculateur qui doit disposer d'une information précise concernant la position du vilebrequin. Pour satisfaire ces besoins, le vilebrequin est équipé d'une roue dentée et d'un capteur qui détecte le passage des dents dans l'objectif d'en informer le calculateur en charge du pilotage des organes de contrôle et/ou de commande. Cette roue dentée s'appelle une "cible moteur".

La cible moteur est devenue un standard. De caractéristiques variées en fonction des constructeurs, son principe est toujours sensiblement le même : une cible moteur est une roue dentée solidaire du vilebrequin, dont la répartition des dents et le nombre de dents sont donnés. Un exemple de cible fréquemment rencontrée en Europe se présente sous la forme d'une roue dentée de 60 dents régulièrement espacées tous les 6°.

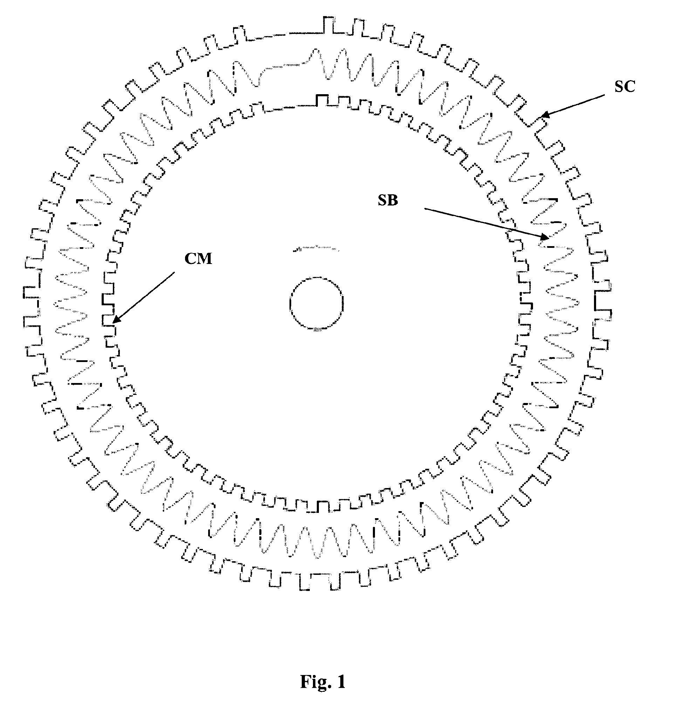

Cependant, pour se servir d'une cible moteur, il faut pouvoir positionner une dent numérotée 1 ayant une position parfaitement connue, c'est-à-dire que l'on doit être capable, à partir du signal du capteur, de déterminer l'instant précis où une dent particulière (la dent 1) passe devant le capteur. Ainsi, pour détecter la position angulaire du vilebrequin, la roue dentée comporte généralement 1 ou 2 dents manquantes qui créent un repère absolu de la position vilebrequin. Sur l'exemple précité de la cible de 60 dents consécutives régulièrement espacées de 6°, deux dents consécutives sont manquantes. On parle de cible moteur de type « 58X » ce qui signifie cible moteur ayant "60 dents moins 2". La détection des dents manquantes permet d'avoir une référence absolue, indiquant ainsi la position précise du vilebrequin. Par définition, on fixe la dent 1 comme étant celle qui suit les deux dents manquantes. La figure 1 représente l'allure d'une cible moteur de type « 58X », notée CM.

Les cibles moteurs sont associées à un capteur qui a pour but de détecter le passage des dents. La figure 1 représente le signal (SB) que délivre un tel capteur dans l'exemple d'une cible 58X. Ce signal analogique doit être conditionné pour pouvoir être exploité. Le résultat de ce conditionnement (SC) est représenté sur la figure 1. Un front montant du signal SC est le reflet du milieu d'une dent. C'est précisément sur la détection de ce front montant que les calculateurs se base pour synchroniser le fonctionnement du moteur. Le premier front montant qui suit les dents manquantes indique donc le milieu de la première dent (dent numérotée « 1 ») de la cible moteur. Le deuxième front correspond naturellement à la deuxième dent et ainsi de suite jusqu'à la 58$^{ième}$ dents. Quand arrivent les dents manquantes, le capteur n'est plus excité jusqu'à l'arrivée de la dent 1, ce qui signifie que pendant la durée du trou, soit 18°, l'information sur la position des dents n'est plus délivrée. On appelle « durée de la dent x » le temps écoulé entre le passage devant le capteur de la dent x et le passage devant le capteur de la dent suivante (notée x+1). Cette rupture d'information pose plusieurs problèmes pour le système d'exploitation de cette cible moteur. En effet, la cible moteur permet de séquencer le fonctionnement du moteur avec diverses finalités :

-    La détection des dents, permet d'informer le système exploitant de la position géométrique du vilebrequin moteur à intervalle régulier. On ne peut donc pas occulter une rupture d'information de 18°, au niveau des dents manquantes.

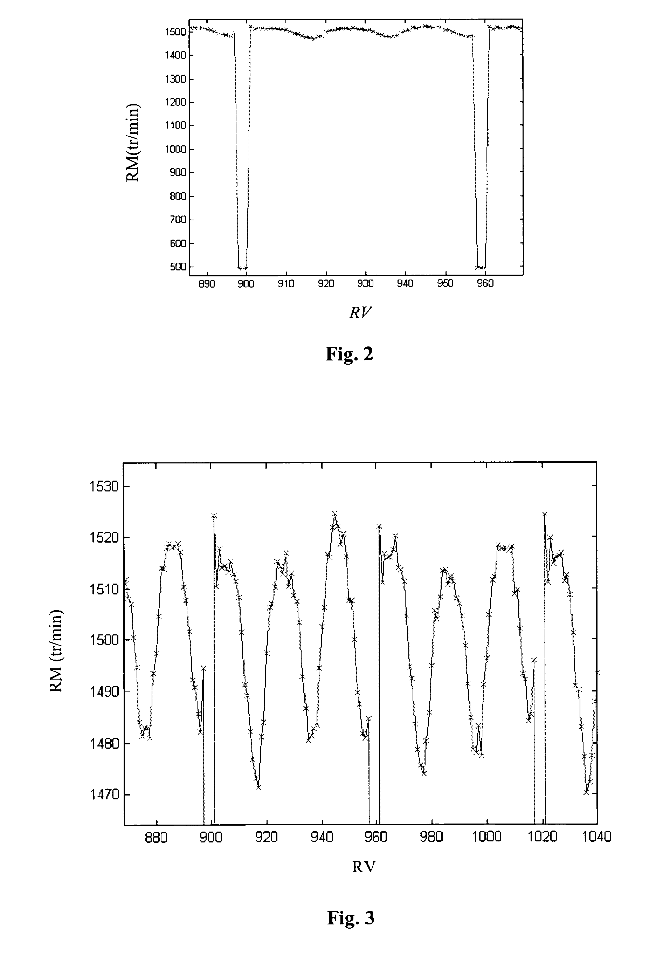

-    La mesure de la consécutivité des dents donne une information indispensable au système exploitant : la vitesse instantanée du vilebrequin tous les 6°. On ne peut donc pas laisser le système exploitant avec une rupture de mesure de la vitesse instantanée sur 18°, au niveau des dents manquantes. La figure 2 illustre une mesure du régime moteur (*RM*) en fonction de la rotation vilebrequin (*RV*). Sans aucune correction, on constate que la vitesse instantanée du moteur est de 1500tr/min sauf au niveau des dents manquantes où la durée de la dernière dent (la 58ième) correspond à la somme de la 58ième dent, de la 59ième dent et de la 60ième dent ce qui revient à diviser le régime par trois (500tr/min).

- Enfin et de manière à optimiser le nombre de capteurs, la détection des dents manquantes permet de déterminer l'indice des dents et donc de repérer la position géométrique du vilebrequin dans le tour. En complément d'une information provenant d'un capteur instrumenté sur l'arbre à cames, la connaissance exacte de la position géométrique du vilebrequin permet de positionner précisément les fenêtres d'injections et/ou d'allumage pour chacun des cylindres.

**État de la technique**

Ainsi, les dents manquantes, bien que nécessaires pour identifier la première dent, provoquent une rupture dans l'arrivée des informations qui séquencent les événements du moteur telle que l'injection. Cependant, ces informations sont indispensables pour continuer à renseigner le système de contrôle tous les 6°. Par exemple, il faut informer le système de contrôle du régime instantané correspondant à une variation du vilebrequin de 6°, et non 18°, pour assurer une cohérence dans la mesure de régime.

Ceci implique qu'il convient d'estimer la position des deux dents manquantes (dent 59 et dent 60) afin de continuer à séquencer le logiciel de contrôle et de fournir une mesure cohérente du régime instantané. Estimer la position d'une dent signifie compléter le signal issu du capteur et conditionné (SC) comme si la cible ne comportait aucune dent manquante. Il s'agit donc d'estimer la durée de chaque dent : temps écoulé entre le passage de la dent 58 et la dent 59 (si elle existait) devant le capteur, et temps écoulé entre le passage de la dent 59 (estimée) et la dent 60 (si elle existait) devant le capteur.

Pour estimer la position de dents manquantes, c'est-à-dire le temps de passage des dents manquantes devant le capteur, on utilise classiquement une simple interpolation ou règle de trois, en fonction des informations concernant les dents précédents, fournies par le signal issu du capteur et conditionné (SC).

Cependant, ce type d'estimation n'est pas acceptable pour un contrôle précis du moteur et notamment pour déterminer avec précision les périodes d'injection en fonction de la position du vilebrequin. La figure 3 représente le régime moteur (RM) en fonction de la rotation vilebrequin (RV). Il s'agit d'un zoom de la figure 2. On constate que le régime moteur connaît des variations de régimes, appelées acyclisme. Cet acyclisme est lié aux différentes phases de fonctionnement du moteur, et en particulier d'une part, à la compression par le piston du mélange carburé (ralentissement du vilebrequin) et à l'explosion du mélange carburé (accélération du vilebrequin) et d'autre part, au nombre de cylindres du moteur dont les instants d'allumage sont régulièrement distribués sur tout le cycle de combustion du moteur (exemple : tous les 180° pour un moteur 4 temps 4 cylindres, tous les 120° pour un moteur 4 temps 6 cylindres). Ceci implique d'une part, que la durée des dents manquantes varie d'un tour de vilebrequin sur l'autre, et d'autre part, que les durées des dents 58, 59 et 60 sont différentes et suivent une variation qui est fonction de l'acyclisme.

L'objet de l'invention concerne une méthode d'estimation du temps écoulé entre le passage devant le capteur d'une dent manquante (si elle existait physiquement) d'une cible moteur et le passage devant le capteur de la dent suivante, tenant compte de l'acyclisme du moteur.

**La méthode selon l'invention**

L'invention concerne une méthode permettant de déterminer en fonction du temps l'angle de rotation d'un vilebrequin d'un moteur à 2 ou 4 temps $j$ comportant $k$ cylindres et une cible moteur, ladite cible étant constituée d'un disque comportant $l$ dents numérotées de 1 à $l$ réparties uniformément à la périphérie dudit disque, dans laquelle on supprime au moins une dent $d$ appelée dent manquante et permettant de déterminer un tour complet du vilebrequin, et dans laquelle on acquiert à l'aide d'un capteur associé à ladite cible un signal périodique en fonction du temps comportant des créneaux, chacun des créneaux indiquant le passage d'une dent devant ledit capteur. La méthode comporte les étapes suivantes :

a) on estime la position d'un créneau manquant sur ledit signal correspondant à ladite dent manquante $d$ au cours d'un cycle N dudit moteur, en réalisant les étapes suivantes :

- on estime au cours du cycle N un intervalle de temps S entre le passage devant ledit capteur d'une dent dp précédent ladite dent manquante $d$ et le passage devant ledit capteur d'une dent $d_s$ suivant ladite dent manquante $d$ à l'aide de l'intervalle de temps entre les passages des mêmes dents au cycle précédent $N-1$ ;

- on estime la position dudit créneau manquant dans ledit intervalle de temps S, en fonction de la position des créneaux dans l'intervalle de temps A entre le passage devant ledit capteur de la dent $d_p$-r et le passage devant ledit capteur de la dent $d_s$-r au cycle N, avec $r = \dfrac{l.j}{2.k}$ ;

b) on détermine en fonction du temps l'angle de rotation du vilebrequin à l'aide dudit signal ainsi modifié.

Selon l'invention, on peut estimer la position du créneau manquant correspondant à la dent manquante *d*, en réalisant les étapes suivantes :

- on mesure à l'aide dudit capteur l'intervalle de temps S entre la dent *d-2* et la dent *d+2* au cycle *N-1* ;

- on estime l'intervalle de temps A entre la dent *d-2* et la dent *d+2* au cycle *N*, à l'aide de la mesure de l'intervalle de temps entre les dents correspondantes pour le cylindre précédent, c'est-à-dire la dent *d-2-r* et la dent *d+2-r* au cycle *N,* avec $r = \dfrac{l.j}{2.k}$ ;

- on estime la durée de la dent *d-2* au cycle *N* en pondérant par le rapport *S*/*A* la mesure de la durée de la dent *d-2-r ;*

- on estime la durée de la dent *d-1* au cycle *N* en pondérant par le rapport *S*/*A* la mesure de la durée de la dent *d-1-r* ;

- on détermine la position dudit créneau en fonction de la position mesurée du créneau correspondant à la dent *d-2,* et des durées estimées des dents *d-2* et *d-1.*

Selon l'invention, on peut également estimer la durée de la dent manquante *d*, pour déterminer de façon fiable la position du créneau correspondant à la dent *d+1*. On peut également, estimer une incertitude sur l'estimation des positions des créneaux correspondant aux dents *d-1, d* et *d+1,* en déterminant également la durée de la dent *d+1,* et en comparant l'intervalle de temps mesuré entre le passage devant le capteur de la dent d-2 et le passage devant le capteur de la dent *d*+2 et un intervalle de temps estimé correspondant issu desdites estimations des durées.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 représente l'allure d'une cible moteur de type « 58X », notée CM, le signal analogique (SB) que délivre le capteur associé, et ce signal analogique conditionné (SC).

- La figure 2 illustre une mesure du régime moteur (*RM*) en fonction de la rotation vilebrequin (*RV*).

- La figure 3 représente le régime moteur *(RM)* en fonction de la rotation vilebrequin (*RV*). Il s'agit d'un zoom de la figure 2.

- La figure 4 présente une courbe de régime instantané (*RM*) en fonction de la rotation vilebrequin (*RV*) déterminée à partir des informations issues de la cible.

- La figure 5A illustre la vitesse instantanée (*VI*) tous les 6° vilebrequin.

- La figure 5B montre l'erreur *(Err)* réalisée par une estimation des dents manquantes.

- La figure 6A illustre la vitesse instantanée (*VI*) tous les 6° vilebrequin.

- La figure 6B montre l'erreur (*Err*) réalisée par l'estimation des dents manquantes selon l'invention.

**Description détaillée de la méthode**

Pour déterminer en fonction du temps l'angle de rotation d'un vilebrequin d'un moteur il est nécessaire de mesurer à la fois le nombre de tours, c'est-à-dire que l'on donne une information sur la position angulaire du vilebrequin tous les 360°, et à la fois la passage de dents d'une cible devant un capteur. Si ces dents sont uniformément réparties à la périphérie de la cible, tous les 6° par exemple, on obtient une information en temps indiquant l'angle de rotation d'un vilebrequin tous les 6°. Pour ce faire, on acquiert à l'aide du capteur associé à la cible un signal périodique en fonction du temps comportant des créneaux, chacun des créneaux indiquant le passage d'une dent devant ce capteur. Cependant, pour obtenir l'information sur le nombre de tours, on supprime au moins une dent *d* appelée dent manquante et permettant de déterminer un tour complet du vilebrequin. Pour continuer à fournir une information tous les 6°, on reconstruit cette dent manquante, c'est-à-dire que l'on estime la position d'un créneau manquant sur le signal. Ce créneau manquant correspondant à la dent manquante *d* : c'est le créneau que devrait fournir le capteur si la dent n'avait pas été supprimée.

La présente invention est décrite dans le cadre d'un moteur à quatre temps comportant six cylindres et une cible 58X, c'est-à-dire que l'on cherche à estimer la position de deux manquantes consécutives, appelées "dent 59" et "dent 60". La méthode est cependant totalement indépendante du type de moteur et du type de cible.

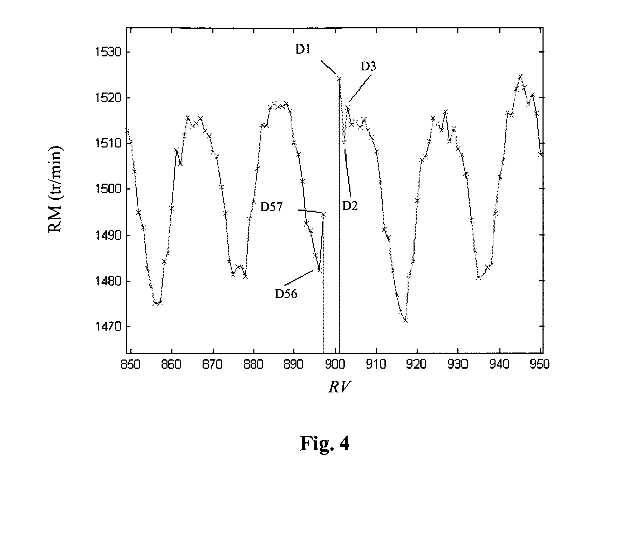

En analysant les mesures données par un capteur positionné sur un moteur quatre temps et six cylindres, on constate que les dents adjacentes aux dents manquantes sont perturbées et déforment la courbe de régime instantané (*RM*) en fonction de la rotation vilebrequin (*RV*) déterminée à partir des informations issues de la cible, comme illustré sur la figure 4, où D56, ... D3 représentent respectivement les dents 56 et 3. Ceci est lié à la nature du capteur et à son système de conditionnement. La mesure de la position de la dent 58 et de la dent 1 donne donc des résultats faussés. Bien que l'erreur soit faible (de l'ordre de 1%) elle donne une mesure qui ne peut pas correspondre avec le fonctionnement physique du moteur. Mais le plus gênant est qu'elle perturbe la reconstruction des dents manquantes 59 et 60.

Selon l'invention, pour s'affranchir de ce problème, la méthode propose de reconstruire quatre dents (les dents 58, 59, 60 et 1) au lieu de deux (59 et 60). Reconstruire une dent consiste à positionner un créneau sur le signal SC à une position correspondant au temps auquel la dent passerait devant le capteur si elle existait physiquement. Estimer la position temporelle sur le signal SC d'une dent revient à estimer l'intervalle de temps de la dent précédente, c'est-à-dire sa durée. Ainsi, pour estimer la position des dents 58, 59, 60 et 1, il est nécessaire d'estimer les durées respectives des dents 57, 58, 59 et 60.

Comme il a été illustré par la figure 3, il est nécessaire pour réaliser une estimation précise des durées des dents, de tenir compte de l'acyclisme du moteur. Cet acyclisme est fonction du nombre de cylindres du moteur, du régime, de la charge et de l'équilibrage du moteur.

Selon l'invention, pour tenir compte de l'acyclisme du moteur, la méthode estime la position des quatre dents en analysant la durée des dents du tour vilebrequin précédent.

Pour faciliter la description de l'exemple qui suit, on adopte les notations suivantes :

$T_{xx\_N}^{m}$ :  correspond à la durée mesurée de la dent x du cycle moteur en cours noté *N*. Il s'agit donc du temps écoulé entre le passage devant le capteur de la dent x et le passage devant le capteur de la dent *x+1*. L'indice m indique que cette durée est mesurée à l'aide du capteur.

$T_{xx\_N-1}^{m}$ :  correspond à la durée mesurée de la dent x du cycle moteur précédent noté *N-1*

$T_{58\_N}^{m}$ :  correspond à la durée mesurée de la dent 58 du cycle moteur en cours. Cette durée correspond à la somme des durées des dents 58, 59 et 60 du cycle N. Il s'agit donc du temps écoulé entre le passage devant le capteur de la dent 58 et le passage devant le capteur de la dent 1. En effet, les dents 59 et 60 sont inexistantes sur une cible 58X.

$T_{58\_N-1}^{m}$ :  correspond à la durée mesurée de la dent 58 du cycle moteur *N-1.*

$T_{xx\_N}^{e}$ :  correspond à l'estimation de la durée de la dent x au cycle N. L'indice e indique que cette durée est estimée à l'aide de la méthode. Il s'agit donc d'une valeur calculée correspondant au temps écoulé estimé entre le passage devant le capteur de la dent (physique ou virtuelle) x et le passage devant le capteur de la dent (physique ou virtuel) *x+1.*

Lors du passage des dents devant le capteur, le temps qui s'est écoulé depuis le passage de la dent précédente est relevé. A raison de 58 dents par tour, cela représente 58 mesures de temps par tour ($T_{1\_N}^{m}$ à $T_{57\_N}^{m}$ et $T_{58\_N}^{m}$) soit 116 mesures par cycle moteur (pour un moteur à quatre temps).

Lorsque, dans le cycle N en cours, on désire estimer la durée des dents 57, 58, 59 et 60, on peut s'appuyer sur les mesures temporelles du cycle précédent.

L'estimation, selon l'invention, des quatre durées des dents repose sur deux principes :

1- Estimation de la durée globale des cinq dents 57, 58, 59, 60 et 1

Dans un premier temps on estime la durée globale des cinq dents 57, 58, 59, 60 et 1 c'est-à-dire le temps écoulé entre le passage devant le capteur de la dent physique 57 et le passage devant le capteur de la dent physique 2. Cette estimation de la somme des durées des cinq dents peut être obtenue par la somme de la mesure des durées correspondantes au cycle précédent *N-1* :

$$\sum_{i=57}^{60} T_{i\_N}^e + T_{1\_N}^m \approx T_{57\_N-1}^m + T_{58\_N-1}^m + T_{1\_N-1}^m = S$$

Cependant, si la somme des temps $T_{57\_N-1}^m$, $T_{58\_N-1}^m$ et $T_{1\_N-1}^m$ donne une bonne approximation de la somme des temps $T_{57\_N}^e$, $T_{58\_N}^e$, $T_{59\_N}^e$, $T_{60\_N}^e$ et $T_{1\_N}^m$ il reste encore à répartir cette somme de sorte que l'acyclisme du moteur soit respecté.

2- Répartition des durées des quatre dents 57 à 60 en fonction de l'acyclisme

L'observation d'un relevé de vitesse instantanée (VI) permet de constater que l'acyclisme d'un moteur quatre temps comportant six cylindres suit un motif qui se répète 6 fois par cycle. Ainsi, sur un moteur à six cylindres, le motif (monté et descente de la courbe de vitesse instantanée) se répète tous les 120 degrés vilebrequin soit toutes les 20 dents sachant que l'écart entre deux dents est de 6 degrés sur une cible 58X.

Ainsi, à l'aide des mesures précédentes sur un même tour, on peut estimer l'acyclisme du moteur pour répartir convenablement la durée des dents : l'observation des mesures de $T_{37\_N}^m$, $T_{38\_N}^m$, $T_{39\_N}^m$, $T_{40\_N}^m$ et $T_{41\_N}^m$ donne une image fidèle de ce que devrait être l'acyclisme du moteur pour estimer les durées respectives des dents 57 à 60 ( $T_{57\_N}^e$, $T_{58\_N}^e$, $T_{59\_N}^e$, $T_{60\_N}^e$ ).

On peut également avec le même principe estimer la durée de la dent 1 : $T_{1\_N}^e$ . A l'aide de cette information il est alors possible d'estimer le temps écoulé entre le passage devant le capteur de la dent 57 et le passage devant le capteur de la dent 2. Cet intervalle de temps peut alors être comparé avec le temps correspondant mesuré, ce qui donne une indication sur l'incertitude de l'estimation.

La mise en équation des éléments ci-dessus et leur simplification donne le résultat ci dessous pour un moteur à six cylindres.

$$T_{57\_N}^e = \frac{T_{37\_N}^m * S}{A} \qquad\qquad T_{58\_N}^e = \frac{T_{38\_N}^m * S}{A}$$

$$T_{59\_N}^e = \frac{T_{39\_N}^m * S}{A} \qquad\qquad T_{60\_N}^e = \frac{T_{40\_N}^m * S}{A}$$

$$T_{1\_N}^e = \frac{T_{41\_N}^m * S}{A}$$

avec :

$$S = T_{57\_N-1}^{m} + T_{58\_N-1}^{m} + T_{1\_N-1}^{m}$$

: terme d'estimation de durée globale

$$A = T_{37\_N}^{m} + T_{38\_N}^{m} + T_{39\_N}^{m} + T_{40\_N}^{m} + T_{41\_N}^{m}$$

: terme d'estimation de l'acyclisme

La généralisation de la méthode à tous types de moteur et tous types de cible peut être ainsi décrite. La reconstruction d'une dent manquante doit tenir compte du type de moteur sur lequel on désire appliquer la méthode. Soit un moteur à *j* temps, comportant *k* cylindres et une cible ayant *l* dents dont au moins une dent manquante. Pour estimer la position d'un créneau manquant sur le signal correspondant à la dent manquante *d* au cours du cycle N, on réalise les étapes suivantes :

- on estime au cours du cycle N un intervalle de temps S entre le passage devant le capteur d'une dent $d_p$ précédent ladite dent manquante *d* et le passage devant le capteur d'une dent $d_s$ suivant la dent manquante *d* à l'aide de l'intervalle de temps entre les passages des mêmes dents au cycle précédent *N-1*;
- on estime la position du créneau manquant dans l'intervalle de temps S, en fonction de la position des créneaux dans l'intervalle de temps A entre le passage devant le capteur de la dent $d_p$-*r* et le passage devant le capteur de

la dent $d_s$-*r* au cycle N, avec $r = \dfrac{l.j}{2.k}$ ;

Selon le mode particulier de réalisation de l'invention où l'on reconstruit également les dents adjacentes à la dent manquante, les étapes deviennent

- on détermine une durée globale entre la dent *d-2* et la dent *d+1* à partir des mesures suivantes : $T_{(d-2)\_N-1}^{m}$, $T_{(d-1)\_N-1}^{m}$, $T_{(d+1)\_N-1}^{m}$. On en déduit un terme d'estimation de durée globale S :

$$S = T_{(d-2)\_N-1}^{m} + T_{(d-1)\_N-1}^{m} + T_{(d+1)\_N-1}^{m} .$$

- on estime l'acyclisme du moteur à l'aide des mesures suivantes : $T_{(d-2)-r\_N}^{m}$, $T_{(d-1)-r\_N}^{m}$, $T_{d-r\_N}^{m}$, $T_{(d+1)-r\_N}^{m}$. On en déduit un terme relatif à l'acyclisme A :

$$A = T_{(d-2)-r\_N}^{m} + T_{(d-1)-r\_N}^{m} + T_{d-r\_N}^{m} + T_{(d+1)-r\_N}^{m}$$

avec :

$$r = \frac{l}{k / j / 2} = \frac{l.j}{2.k}$$

- on estime au moins les durées suivantes, à partir desquelles on détermine la position de la dent manquante : $T^e_{(d-2)\_N}$, $T^e_{(d-1)\_N}$, $T^e_{d\_N}$. La durée estimée, $T^e_{(d-1)\_N}$, permet de positionner parfaitement la dent *d* par rapport à la dent *d-1*, et la dent *d-1* est correctement positionnée, c'est-à-dire qu'elle n'est pas dépendante de la distorsion du signal SC, grâce à la durée $T^e_{(d-2)\_N}$. La durée $T^e_{d\_N}$ permet de positionner correctement la dent *d+1,* permettant, si celle-ci est physique d'évaluer une incertitude sur l'estimation.

Le rapport *S/A* représente l'intervalle de temps mesuré entre la dent *d-2* et la dent *d+2* au cycle *N-1,* divisé par l'intervalle de temps estimé entre la dent *d-2* et la dent *d+2* au cycle *N.* Cette dernière estimation est réalisée à l'aide de la mesure de l'intervalle de temps entre les dents correspondantes pour le cylindre précédent, c'est-à-dire la dent *d-2-r* et la dent *d+2-r* au cycle N, avec toujours $r = \dfrac{l.j}{2.k}$. Ce rapport *S/A* permet de pondérer l'observation faite au cycle en cours : $T^e_{d\_N} = \dfrac{T^m_{d\_N} * S}{A}$

Ainsi, pour un moteur quatre temps comportant 4 cylindres et une cible 58X, l'acyclisme suit un motif qui se répète 4 fois par cycle, tous les 180 degrés soit toutes les 30 dents. L'estimation des durées des quatre dents s'écrit alors :

$$T^e_{57\_N} = \frac{T^m_{27\_N} * S}{A'} \qquad\qquad T^e_{58\_N} = \frac{T^m_{28\_N} * S}{A'}$$

$$T^e_{59\_N} = \frac{T^m_{29\_N} * S}{A'} \qquad\qquad T^e_{60\_N} = \frac{T^m_{30\_N} * S}{A'}$$

$$T^e_{1\_N} = \frac{T^m_{31\_N} * S}{A'}$$

avec :

$$S = T^m_{57\_N-1} + T^m_{58\_N-1} + T^m_{1\_N-1}$$

: terme d'estimation de durée globale

$$A' = T^m_{27\_N} + T^m_{28\_N} + T^m_{29\_N} + T^m_{30\_N} + T^m_{31\_N}$$

: terme d'estimation de l'acyclisme

**EP 1 936 169 A2**

**Exemple d'application de la méthode d'estimation**

Afin d'illustrer des bénéfices de la méthode, deux estimations de position de dents manquantes sont réalisées. L'une, le cas N°1, sans estimer la position des dents adjacentes, et l'autre, le cas N°2, en utilisant la méthode selon l'invention.

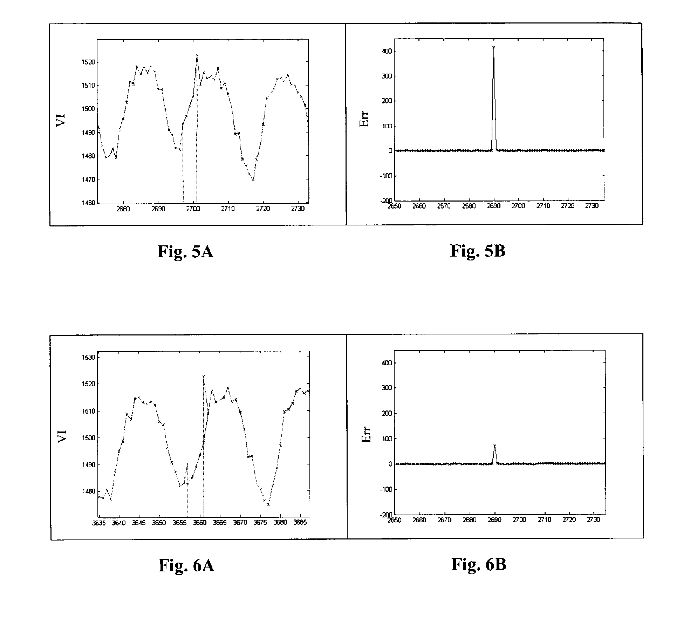

Dans le cas N°1 (figures 5A et 5B), on estime les durées des dents 58, 59 et 60 sans toucher aux durées des dents 57 et 1. La figure 5A illustre la vitesse instantanée (*VI*) tous les 6° vilebrequin. La figure 5B montre l'erreur (*Err*) réalisée par l'estimation.

Dans le cas N°2 (figures 6A et 6B), on estime les durées des dents 58, 59 et 60 ainsi que celles des dents 57 et 1. La figure 6A illustre la vitesse instantanée (*VI*) tous les 6° vilebrequin. La figure 6B montre l'erreur (*Err*) réalisée par l'estimation.

L'analyse de l'erreur d'estimation montre une différence d'un facteur quatre entre le cas N°1 et N°2.

La méthode permet donc de reconstruire un signal issu du capteur lié à la cible, de façon à ce que l'information donnée par la cible indique la position angulaire du vilebrequin en continu. A partir de ce signal on peut déterminer en fonction du temps l'angle de rotation du vilebrequin avec une précision liée au nombre de dent sur la cible (à 6° près pour une cible 58X).

**Revendications**

1. Méthode permettant de déterminer en fonction du temps l'angle de rotation d'un vilebrequin d'un moteur à 2 ou 4 temps *j* comportant *k* cylindres et une cible moteur, ladite cible étant constituée d'un disque comportant *l* dents numérotées de 1 à *l* réparties uniformément à la périphérie dudit disque, dans laquelle on supprime au moins une dent *d* appelée dent manquante et permettant de déterminer un tour complet du vilebrequin, et dans laquelle on acquiert à l'aide d'un capteur associé à ladite cible un signal périodique en fonction du temps comportant des créneaux, chacun des créneaux indiquant le passage d'une dent devant ledit capteur, **caractérisée en ce que** la méthode comporte les étapes suivantes :

   a) on estime la position d'un créneau manquant sur ledit signal correspondant à ladite dent manquante *d* au cours d'un cycle N dudit moteur, en réalisant les étapes suivantes :

   - on estime au cours du cycle N un intervalle de temps S entre le passage devant ledit capteur d'une dent dp précédent ladite dent manquante *d* et le passage devant ledit capteur d'une dent $d_s$ suivant ladite dent manquante *d* à l'aide de l'intervalle de temps entre les passages des mêmes dents au cycle précédent *N-1* ;
   - on estime la position dudit créneau manquant dans ledit intervalle de temps *S*, en fonction de la position des créneaux dans l'intervalle de temps *A* entre le passage devant ledit capteur de la dent $d_p$-*r* et le passage devant ledit capteur de la dent $d_s$-*r* au cycle N, avec $r = \dfrac{l.j}{2.k}$ ;

   b) on détermine en fonction du temps l'angle de rotation du vilebrequin à l'aide dudit signal ainsi modifié.

2. Méthode selon la revendication 1, dans laquelle on estime la position dudit créneau manquant correspondant à ladite dent manquante *d,* en réalisant les étapes suivantes :

   - on mesure à l'aide dudit capteur l'intervalle de temps S entre la dent *d-2* et la dent *d+2* au cycle *N-1*;
   - on estime l'intervalle de temps A entre la dent *d-2* et la dent *d+2* au cycle *N,* à l'aide de la mesure de l'intervalle de temps entre les dents correspondantes pour le cylindre précédent, c'est-à-dire la dent *d-2-r* et la dent *d+2-r* au cycle N, avec $r = \dfrac{l.j}{2.k}$ ;
   - on estime la durée de la dent *d-2* au cycle *N* en pondérant par le rapport *S/A* la mesure de la durée de la dent *d-2-r* ;
   - on estime la durée de la dent *d-1* au cycle *N* en pondérant par le rapport *S/A* la mesure de la durée de la dent *d-1-r* ;
   - on détermine la position dudit créneau en fonction de la position mesurée du créneau correspondant à la dent *d-2,* et des durées estimées des dents *d-2* et *d-1.*

9

**3.** Méthode selon la revendication 2, dans laquelle on estime également la durée de la dent manquante $d$, pour déterminer de façon fiable la position du créneau correspondant à la dent $d+1$.

**4.** Méthode selon la revendication 3, dans laquelle on estime une incertitude sur l'estimation des positions des créneaux correspondant aux dents $d-1$, $d$ et $d+1$, en déterminant également la durée de la dent $d+1$, et en comparant l'intervalle de temps mesuré entre le passage devant le capteur de la dent $d-2$ et le passage devant le capteur de la dent $d+2$ et un intervalle de temps estimé correspondant issu desdites estimations des durées.

**Fig. 1**

**Fig. 2**

**Fig. 3**

**Fig. 4**

Fig. 5A

Fig. 5B

Fig. 6A

Fig. 6B